(19)

**Europäisches Patentamt**
**European Patent Office**
**Office européen des brevets**

(11)  **EP 4 621 499 A1**

(12)  **EUROPEAN PATENT APPLICATION**

(43) Date of publication:
24.09.2025  Bulletin 2025/39

(21) Application number: 25160906.1

(22) Date of filing: 28.02.2025

(51) International Patent Classification (IPC):
**G03H 1/02** *(2006.01)*       **G02B 5/32** *(2006.01)*
**G03H 1/04** *(2006.01)*       G02B 27/01 *(2006.01)*

(52) Cooperative Patent Classification (CPC):
**G03H 1/0248; G02B 5/32; G02B 27/0103;**
**G03H 1/0402;** G02B 2027/0118; G02B 2027/0194;
G03H 2001/0415; G03H 2001/0439; G03H 2223/14

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  21.03.2024  CN 202410326317

(71) Applicant: **Nika Optics (Tianjin) Co., Ltd.**
**Tianjin 300450 (CN)**

(72) Inventors:
• **HU, Dejiao**
**Tianjin 300450 (CN)**
• **YANG, Mu**
**Tianjin 300450 (CN)**
• **DU, Youcheng**
**Tianjin 300450 (CN)**

(74) Representative: **Puschmann Borchert Kaiser**
**Klettner**
**Patentanwälte Partnerschaft mbB**
**Bajuwarenring 21**
**82041 Oberhaching (DE)**

(54)  **VOLUME HOLOGRAPHIC OPTICAL DIFFUSION ELEMENT AND MANUFACTURING METHOD AND APPARATUS THEREOF**

(57)    The present invention relates to a volume holographic optical diffusion element and a manufacturing method and apparatus thereof. A first lens assembly is provided between a first diffusion element and a holographic photosensitive material layer. A real image of the first diffusion element is projected onto the holographic photosensitive material layer by the first lens assembly. Among rays of light emitted by random point light sources generated when the first diffusion element is irradiated with signal light, only rays within a certain angle range can pass through the first lens assembly due to the constraint of the entrance pupil aperture of the first lens assembly, so that rays of light on a rear side of the real image projected onto the holographic photosensitive material layer have a limited divergence angle. Accordingly, reproduced signal light generated in a display process also has a limited divergence angle, which not only meets the requirement for diffusion, i.e., all real image points can enter the human eye, but also avoids the waste of light energy caused by excess diffusion, thereby improving the utilization rate of light energy, improving display brightness and reducing energy consumption of device, having great practical value.

FIG. 4

## Description

## TECHNICAL FIELD

The present invention relates to the technical field of display, in particular to a volume holographic optical diffusion element and a manufacturing method and apparatus thereof.

## BACKGROUND

Head-up display technology makes it possible to project driving information, such as car dashboard and navigation information, onto a windshield, where the driving information enters human eyes after being reflected by the windshield, so that passengers in the car can see the driving information on the windshield, thus avoiding potential safety hazard caused by the driver looking down at the driving information during driving process.

In projection head-up display technology, a real image of driving information is projected onto a specially designed windshield by a projection device. With the optical diffusion effect of the windshield, rays of light of all real image points enter human eyes, so that passengers can see the real image of driving information on the windshield. For the purpose of this function, it is necessary to provide an optical diffusion film on the windshield to further diffuse rays of light of the real image projected on the windshield, so as to achieve larger divergence angle of the rays of light. For example, frosted glass may be used as the diffusion film. In this case, the random tiny particles on the surface of the frosted glass can diffuse rays of light of the real image projected thereon in full spatial directions, as a result, the real image can be seen from all around.

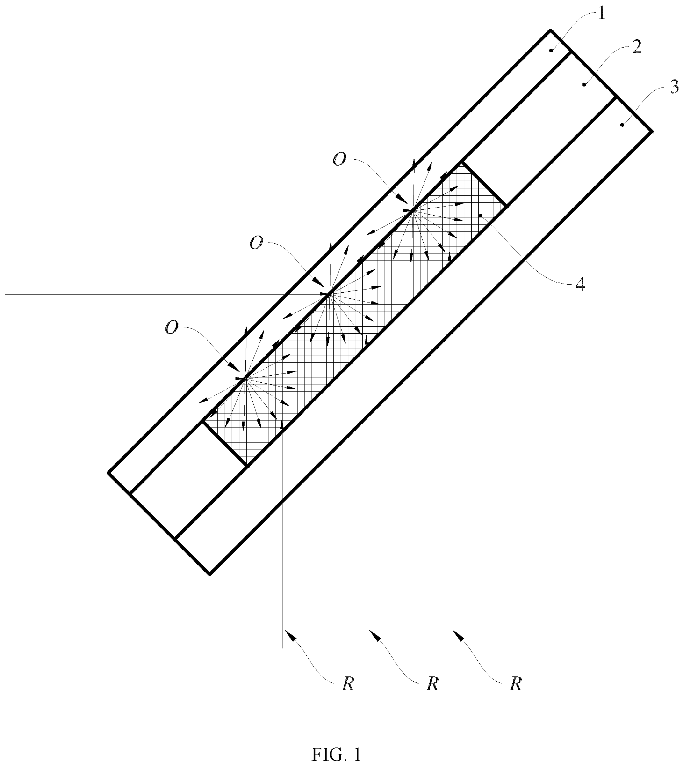

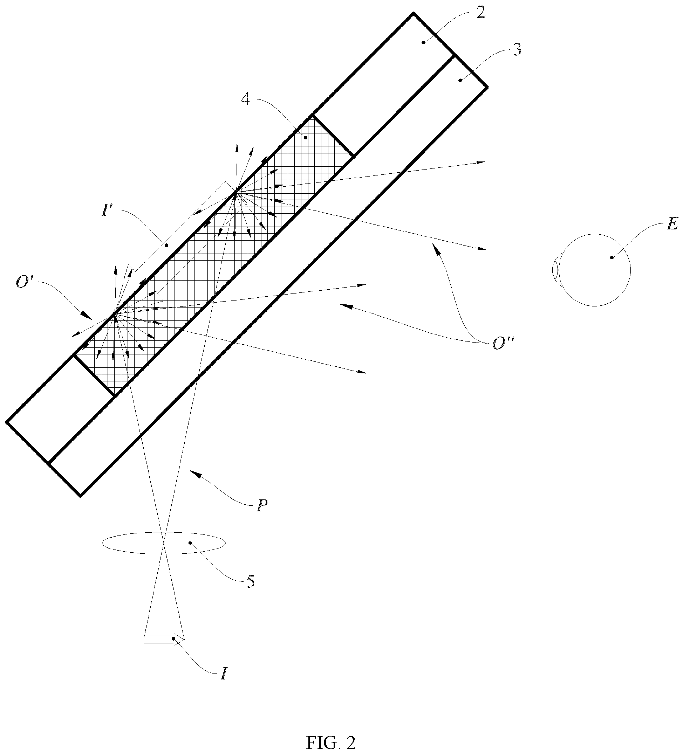

Frosted glass has a property that all the light irradiating on its surface can be diffused to the whole space, which means that frosted glass cannot be directly used to make windshields. By using volume holography, it is possible to manufacture a diffusion film that only has a diffusion effect on rays of light within a specific incident angle range. For example, a volume hologram may be generated using frosted glass as a template to replicate the diffusion property of the frosted glass into the volume hologram with the frosted glass adhered to a photosensitive material. As shown in an exposure process illustrated in FIG. 1 and FIG. 2, when a laser beam irradiates frosted glass 1, it will be randomly refracted or reflected by the frosted glass 1 to generate a large number of uniformly distributed divergent sub-light sources. These divergent sub-light sources, which serve as signal light O, interfere with reference light R from another direction. The interference fringes generated are recorded into the photosensitive material 2 to form a volume hologram 4. When the volume hologram 4 is irradiated with a light beam emitted from the projection device in the direction of the original reference light R, the signal light O will be reproduced in the area on the volume hologram illuminated by a pattern I projected from the projection device 5, The reproduced signal light O 'looks like point light sources emitted from the photosensitive material layer. When such rays of light enter human eyes E, the real image I' of the pattern I projected by the projection device 5 will be presented on the photosensitive material layer 2.

However, frosted glass can result in a large divergence angle of a light beam, which nearly covers a full range of solid angle ($4\pi$). According to the exposure mode shown in FIG. 1, diffused light beams in half-space ($2\pi$) on a rear side of the frosted glass serve as signal light. Therefore, reproduced signal light also has a solid divergence angle of $2\pi$. As a result, many rays of reproduced signal light fail to enter human eyes, resulting in low efficiency, and thus reducing practical value thereof.

## SUMMARY

The present invention provides a method for manufacturing a volume holographic optical diffusion element with a limited divergence angle, which can improve the utilization rate of light energy, improve display brightness and reduce energy consumption of device, and greatly increase the practical value.

According to a first aspect of the present invention, a method for manufacturing a volume holographic optical diffusion element is provided. The method includes: providing, on a side of a holographic photosensitive material layer, a first diffusion element having a light diffusion property; and irradiating signal light on the holographic photosensitive material layer after the signal light passes through the first diffusion element, such that the signal light interferes with reference light irradiating the holographic photosensitive material layer. The method further includes: providing a first lens assembly between the holographic photosensitive material layer and the first diffusion element; and projecting a real image of the first diffusion element onto the holographic photosensitive material layer by using the first lens assembly.

According to the method of the present invention, the first lens assembly is provided between the first diffusion element and the holographic photosensitive material layer, and the real image of the first diffusion element is projected onto the holographic photosensitive material layer by using the first lens assembly. Among rays of light emitted by random point light sources generated when the signal light irradiates the first diffusion element, only rays of light within a certain angle range can pass through the first lens assembly due to the constraint of the entrance pupil aperture of the first lens assembly, so that rays of light on a rear side of the real image projected onto the holographic photosensitive material layer have a limited divergence angle. Accordingly, reproduced signal light generated in a display process also has a limited divergence angle. This not only meets the requirement for diffusion, i.e., all real image points can enter the human eye, but also avoids the waste of light energy caused by excess diffusion, thereby improving the utilization rate of light energy, improving display brightness and reducing energy consumption of device, with great practical value.

When the volume holographic optical diffusion element is irradiated by a light beam along the direction of the reference light, reference light is generated. The direction of reproduced signal light can be regulated by changing an inclination angle of the first diffusion element and/or a deviation distance of the first diffusion element. A divergence angle $\theta$ of the reproduced signal light can be regulated by changing a distance between the first diffusion element and the first lens assembly, an image focal length of the first lens assembly and/or an entrance pupil aperture of the first lens assembly. In this way, a high-efficiency, flexibly-designed volume holographic optical diffusion element with any light propagation direction and divergence angle can be manufactured without interference of stray light.

Particularly, the first lens assembly may include one, two, or more lenses, and may further include an aperture. The first diffusion element may be preferably a frosted glass or other elements having a light diffusion property.

According to a second aspect of the present invention, an apparatus for manufacturing a volume holographic optical diffusion element is provided. The apparatus includes a signal light generation system and a reference light generation system, provided for interferometrically exposing a holographic photosensitive material layer to manufacture a volume holographic optical diffusion element. The signal light generation system includes a first diffusion element and a first lens assembly, provided on a side of the holographic photosensitive material layer. The first diffusion element, the first lens assembly, and the holographic photosensitive material layer are provided sequentially along a direction of the signal light. The first diffusion element has a light diffusion property, and its real image is located on the holographic photosensitive material layer.

According to the apparatus of the present invention, the first lens assembly is provided between the first diffusion element and the holographic photosensitive material layer, and the real image of the first diffusion element is projected onto the holographic photosensitive material layer by using the first lens assembly. Among rays of light emitted by random point light sources generated when the signal light irradiates the first diffusion element, only rays of light within a certain angle range can pass through the first lens assembly due to the constraint of an entrance pupil aperture of the first lens assembly, so that rays of light on a rear side of the real image projected onto the holographic photosensitive material layer have a limited divergence angle. Accordingly, the reproduced signal light generated in a display process also has a limited divergence angle. This not only meets the requirement for diffusion, i.e., all real image points can enter the human eye, but also avoids the waste of light energy caused by excess diffusion, thereby improving the utilization rate of light energy, improving display brightness and reducing energy consumption of device, having great practical value.

When the volume holographic optical diffusion element is irradiated by a light beam along the direction of reference light, the direction of reproduced signal light can be regulated by changing an inclination angle of the first diffusion element and/or a deviation distance of the first diffusion element. A divergence angle $\theta$ of the reproduced signal light can be regulated by changing a distance between the first diffusion element and the first lens assembly, an image focal length of the first lens assembly and/or an entrance pupil aperture of the first lens assembly. In this way, a high-efficiency, flexibly-designed volume holographic optical diffusion element with any light propagation direction and divergence angle can be manufactured without interference of stray light.

The reference light generation system may include a second diffusion element and a second lens assembly, which are provided on the side of the holographic photosensitive material layer. The second diffusion element, the second lens assembly, and the holographic photosensitive material layer are sequentially provided along the direction of reference light. The second diffusion element has a light diffusion property. The real image of the second diffusion element is located on the holographic photosensitive material layer and coincides with the real image of the first diffusion element. In this way, the manufactured holographic optical diffusion element requires less assembly accuracy of the projection device, which is conducive to reducing the assembly difficulty.

Particularly, the first lens assembly may include one, two, or more lenses, and may further include an aperture. The first diffusion element and the second diffusion element may be a frosted glass or other elements having a light diffusion property.

According to a third aspect of the present invention, a volume holographic optical diffusion element is provided. The volume holographic optical diffusion element includes a holographic photosensitive material layer. Reproduced signal light is generated only when the holographic photosensitive material layer is irradiated by rays of light in a direction of reference light. Source points of the reproduced signal light are located on the holographic photosensitive material layer. A solid divergence angle $\theta$ of the reproduced signal light satisfies $\theta \in (0, 0.5\,\pi)$, preferably $\theta \in [0.001\,\pi, 0.5\,\pi]$, more preferably $\theta \in [0.002\,\pi, 0.3\,\pi]$.

According to the volume holographic optical diffusion element of the present invention, the reproduced signal light is generated only when the volume holographic optical diffusion element is irradiated by rays of light in the direction of reference light. In other words, the volume holographic optical diffusion element only has a diffusion effect on projection light within a specific incident angle range, but has no diffusion effect on incident light in other directions. Therefore, the volume holographic optical diffusion element has high transmittance in most directions. The reproduced signal light not only has its source points located on the holographic photosensitive material layer, but also has a limited solid divergence angle, which not only meets the requirement for diffusion, i.e., all real image points can enter the human eye, but also avoids the waste of light energy caused by excess diffusion, thereby improving the utilization rate of light energy, improving display brightness and reducing energy consumption of device, and having great practical value. The volume holographic optical diffusion element may be manufactured using the method of the first aspect or the apparatus of the second aspect.

The volume holographic optical diffusion element may further include a transparent substrate on which the holographic photosensitive material layer is formed. The transparent substrate may be a vehicle window, a display window, or the like. The vehicle window may be a windshield, a side window, or a rear window.

According to a fourth aspect of the present invention, a proj ection screen product is provided. The projection screen product includes a projection device and the above volume holographic optical diffusion element. Rays of light emitted from the projection device irradiate the volume holographic optical diffusion element along a direction of the reference light.

According to the projection screen product of the present invention, the volume holographic optical diffusion element with high transmittance in most directions is used as a display interface, so that the human eye can not only see virtual images projected by the projection device on the volume holographic optical diffusion element, but also see the real world through the volume holographic optical diffusion element, thereby presenting the virtual image along with the real world. The reproduced signal light generated when the projection device irradiates the volume holographic optical diffusion element has a limited solid divergence angle, which not only meets the requirement for diffusion, i.e., all real image points can enter the human eye, but also avoids the waste of light energy caused by excess diffusion, thereby improving the utilization rate of light energy, improving display brightness and reducing energy consumption of device, having great practical value. The projection screen product may be a projection head-up display product.

Compared with the existing art, the present invention has following beneficial effects. Reproduced signal light not only has its source points located on the holographic photosensitive material layer, but also has a limited solid divergence angle, which not only meets the requirement for diffusion, i.e., all real image points can enter the human eye, but also avoids the waste of light energy caused by excess diffusion, thereby improving the utilization rate of light energy, improving display brightness and reducing energy consumption of device, having great practical value. According to the method and apparatus for manufacturing the volume holographic optical diffusion element in the present invention, by means of regulation, a high-efficiency, flexibly-designed volume holographic optical diffusion element with any light propagation direction and divergence angle can be manufactured without interference of stray light.

Additional advantages, features and possible applications of the present invention will be apparent from the description which follows, in which reference is made to the embodiments illustrated in the drawings.

**BRIEF DESCRIPTION OF DRAWINGS**

The drawings are provided for illustrative purposes only, and should not be construed as limiting the present invention. In order to better illustrate the present invention, some parts in the drawings may be omitted, enlarged or reduced, and the drawings do not represent the size of actual products. It would be understood for those skilled in the art that certain well-known structures and description thereof may be omitted in the drawings. In the drawings:

FIG. 1 is a schematic diagram of a manufacturing process of a conventional volume holographic diffusion film according to prior art;

FIG. 2 is a schematic diagram of a display process of the conventional volume holographic diffusion film shown in FIG. 1;

FIG. 3 is a schematic diagram of a display process of a volume holographic optical diffusion element according to an embodiment of the present invention;

FIG. 4 is a schematic diagram of a manufacturing process of the volume holographic optical diffusion element shown in FIG. 3;

FIG. 5 is a schematic principle diagram of regulating a solid divergence angle of reproduced signal light;

FIG. 6 is a schematic principle diagram of regulating a direction of reproduced signal light;

FIG. 7 is another schematic principle diagram of regulating a direction of reproduced signal light;

FIG. 8 is a schematic diagram of a structure and optical path of a possible signal light generation system according to an embodiment of the present invention; and

FIG. 9 is a schematic diagram of a structure and optical path of a possible reference light generation system according to an embodiment of the present invention.

Reference numerals in FIGS. 1-2: 1 frosted glass; 2 photosensitive material; 3 substrate; 4 volume hologram; 5 lens assembly of projection device; O signal light; R reference light, P projection light, O' reproduced signal light; O" reproduced signal light entering the human eye; I pattern projected by projection device; I' real image of pattern projected by projection device; and E human eye.

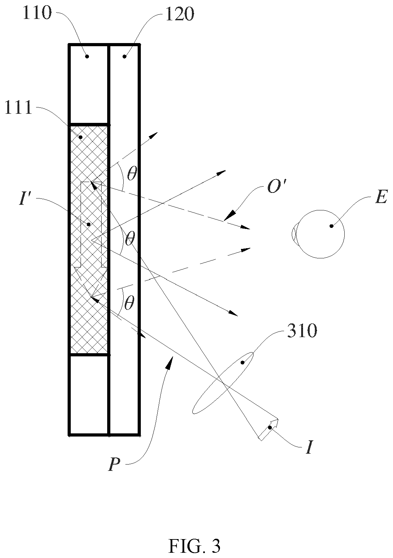

Reference numerals in FIGS. 3 to 8: 110 holographic photosensitive material layer; 111 volume hologram; 120 transparent substrate; 210 signal light generation system; 211 first diffusion element; 212 first lens assembly; 2121 lens; aperture2122 aperture; 220 reference light generation system; 221 second diffusion element; 222 second lens assembly; 310 third lens assembly; O signal light; R reference light; P projection light; O'reproduced signal light; I pattern projected by projection device; I' real image of pattern projected by projection device; and E human eye.

## DETAILED DESCRIPTION

In order to allow those skilled in the art to better understand the present invention, the present invention will be described in further detail below with reference to embodiments.

FIG. 3 illustrates an embodiment of a volume holographic optical diffusion element according to the present invention, which at least includes a holographic photosensitive material layer 110 formed of a holographic photosensitive material. The holographic photosensitive material layer 110 generates a volume hologram 111 upon interferometric exposure with signal light O and reference light R. The volume holographic optical diffusion element is configured to have a diffusion effect only on projection beams within a specific incident angle range (along a direction of the reference light) but have no diffusion effect on incident light in other directions, thus having high transmittance in most directions. As shown in FIG. 3, when the volume hologram 111 is irradiated with light beams carrying information in a direction of the reference light R, reproduced signal light O' carrying said information is generated to present a real image I' of said information. Source points of the reproduced signal light O' are located on the volume hologram 111, which look like point light sources emitted from the holographic photosensitive material layer 110. Further, the reproduced signal light O'has a limited solid divergence angle which satisfies $\theta \in (0, 0.5\pi)$, so that the human eye E can see all real image points I', and the reproduced signal light O' that does not enter the human eye E is less than that of a traditional volume holographic diffusion film, thus improving the utilization rate of light energy, improving display brightness and reducing energy consumption of device, achieving great practical value.

Generally, the smaller the solid divergence angle $\theta$, the less the reproduced signal light O' that does not enter the human eye E, and the higher the utilization rate of light energy. However, a too small solid divergence angle $\theta$ may not ensure that all real image points I' can be seen by the human eye E. Therefore, the solid divergence angle $\theta$ preferably satisfies $\theta \in [0.001\pi, 0.5\pi]$, more preferably $\theta \in [0.002\pi, 0.3\pi]$, which can be designed according to application scenarios.

In the present embodiment, the volume holographic optical diffusion element further includes a transparent substrate 120 on which the holographic photosensitive material layer 110 is formed. In a specific application scenario, the transparent substrate 120 may be a vehicle window, a display window, or the like. The vehicle window includes, but is not limited to, a windshield, a side window, and a rear window. In a projection head-up display apparatus, a windshield may be directly used as the transparent substrate 120 in order to provide driving information updated in real time to a driver. Further, the transparent substrate 120 may also be a transparent film having a back surface with an adhesive property, so that a molded volume holographic optical diffusion element may be adhered to the display surface of a projection screen such as a vehicle window or a display window.

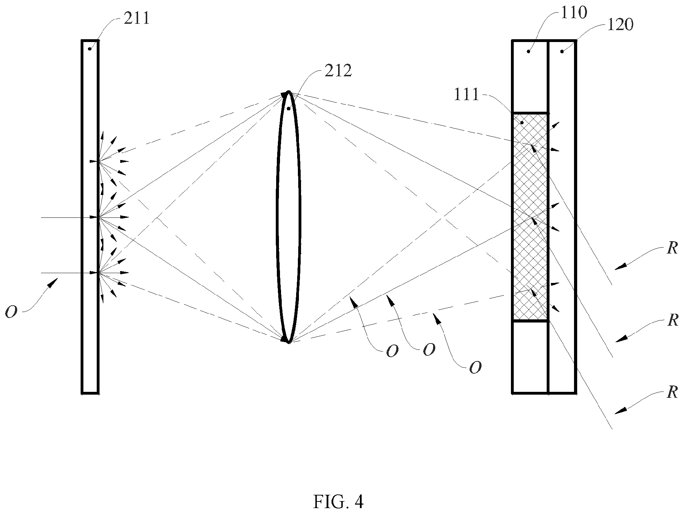

The volume holographic optical diffusion element may be manufactured using, as a template, a first diffusion element 211 with a light diffusion property. FIG. 4 illustrates a possible manufacturing process. As shown in FIG. 4, an apparatus for manufacturing the volume holographic optical diffusion element mentioned above includes a signal light generation system and a reference light generation system for interferometrically exposing the holographic photosensitive material layer 110 to manufacture the volume holographic optical diffusion element. The signal light generation system includes a first diffusion element 211 and a first lens assembly 212. The first diffusion element 211, the first lens assembly 212, and the holographic photosensitive material layer 110 are sequentially provided along a direction of the signal light O. The first diffusion element 211 has a light diffusion property and its real image is located on the holographic photosensitive material layer 110. The method for manufacturing the volume holographic optical diffusion element includes: irradiating the first diffusion element 211 with the signal light O; and projecting, by using the first lens assembly 212, the real image of the first diffusion element 211 onto the holographic photosensitive material layer 110 to interfere with the reference light R irradiating the holographic photosensitive material layer 110, thereby replicating only part of the light diffusion property of the first diffusion element 211 onto the holographic photosensitive material layer 110.

According to this embodiment, when the first diffusion element 211 is irradiated with the signal light O, the first diffusion element 211 will diffuse the signal light O, so that a large number of uniformly distributed random point light sources are generated on a rear side of the first diffusion element 211. Rays of light emitted from these point light sources have a large divergence angle. Among rays of light emitted from the random point light sources, only rays of light within a certain angle range can pass through the first lens assembly 212 due to the constraint of the entrance pupil aperture of the first lens assembly 212. After these rays of light pass through the first lens assembly 212, a conjugate real image of the random point light sources will be formed on the holographic photosensitive material layer 110. Due to the constraint of the pupil of the first lens assembly 212, rays of light on a rear side of the conjugate real image have a limited divergence angle. At this time, if the reference light R is introduced to interfere with the signal light O in the vicinity of the conjugate real image, the holographic photosensitive material layer 110 can be photosensitive to record the conjugate real image of the point light sources so as to form the volume hologram 111. During a projection display process, when the volume hologram 111 is irradiated with rays of light projected by a projection device, the reproduced signal light O' having a limited divergence angle will be generated in an irradiated area. By design, the divergence angle of the signal light O can be constrained to only irradiate an area near the human eye E, ensuring the effective utilization of light energy.

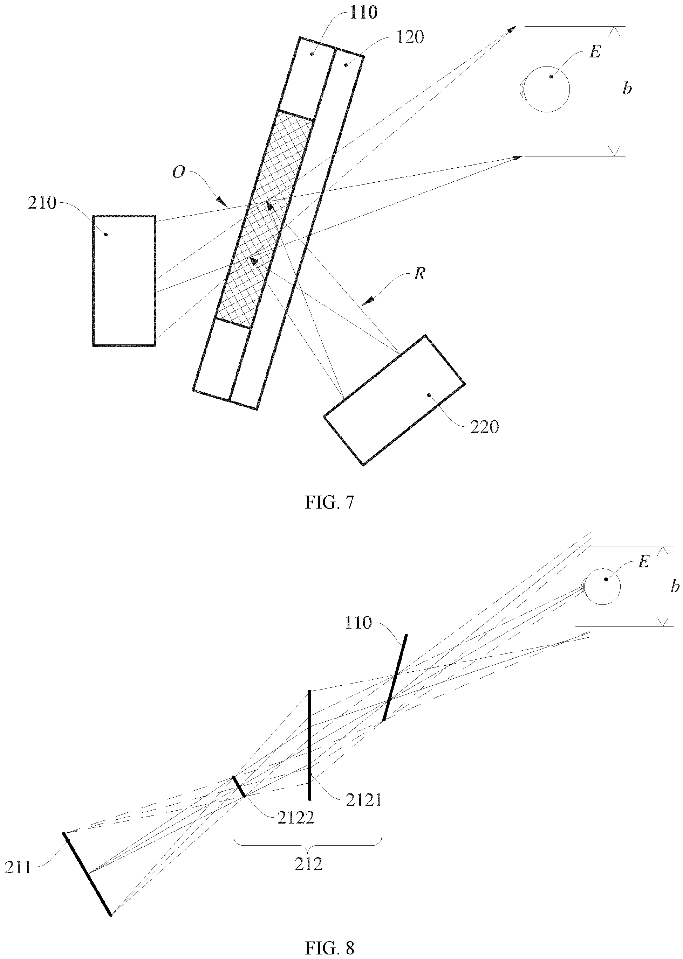

Performance such as the direction and divergence angle of the reproduced signal light O' often needs to be regulated according to specific application scenarios. For example, in the projection head-up display device, the plane where the holographic photosensitive material layer 110 is located has a certain inclination angle, as shown in FIG. 7, and it is required that the human eye E can see projected real images I' within a certain eye box range. To this end, it is necessary to design a signal light generation system 210 and a reference light generation system 220 in a targeted manner. For the signal light generation system 210, it is required that the plane of the conjugate real image formed, after the signal light O diffused by the first diffusion element 211 passing through the system, should coincide with the plane of the holographic photosensitive material layer 110 and that the size of the exit pupil of the system should be equal to the size of an eye box b. For the reference light generation system 220, it is required that an area irradiated by the reference light R after passing through the system on the plane of the holographic photosensitive material layer 110 should cover an area irradiated by the signal light O.

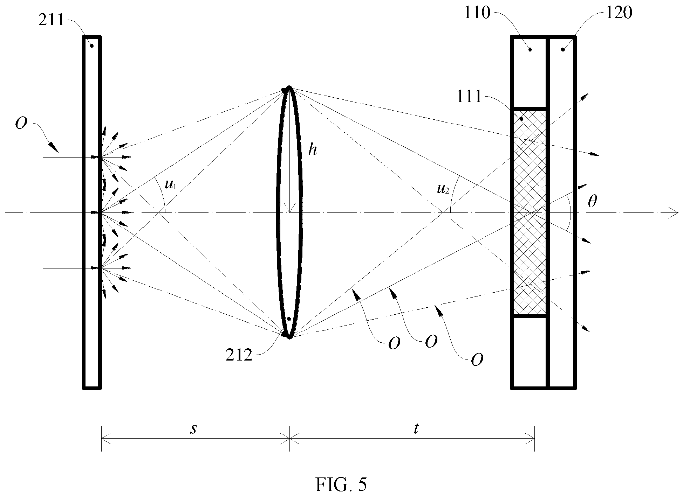

Performance such as the direction and solid divergence angle of reproduced signal light can be regulated by changing parameters such as the distance between the first diffusion element 211 and the first lens assembly 212, the inclination angle of the first diffusion element 211, the deviation distance of the first diffusion element 211, the focal length of the first lens assembly 212, and the entrance pupil aperture (entrance pupil radius) of the first lens assembly 212, so as to manufacture a high-efficiency, flexibly-designed volume holographic optical diffusion element with any light propagation direction and divergence angle without interference of stray light. As shown in FIG. 5, in the case of paraxial approximation, a solid divergence angle $\theta$ at various positions in the volume hologram 111 is related to an image aperture angle $u_2$, i.e., $\theta \approx 2*u_2$. According to the ideal optical system imaging formula, it can be obtained that $\theta$

$$\theta \approx 2 \arctan\left(\frac{h}{t}\right) = 2 \arctan\left[\frac{h(s+f)}{sf}\right],$$

where $f$ is the image focal length of the first lens assembly 212; s is the distance (object distance) between the first diffusion element 211 and the object plane of the first lens assembly 212; t is the distance (image distance) between the image and image plane of the first diffusion element 211; and h is the entrance pupil radius of the first lens assembly 212. Therefore, the solid divergence angle of reproduced signal light is mainly determined by the entrance pupil radius of the first lens assembly 212, the image focal length of the first lens assembly 212, and the distance between the first lens assembly 212 and the first diffusion element 211.

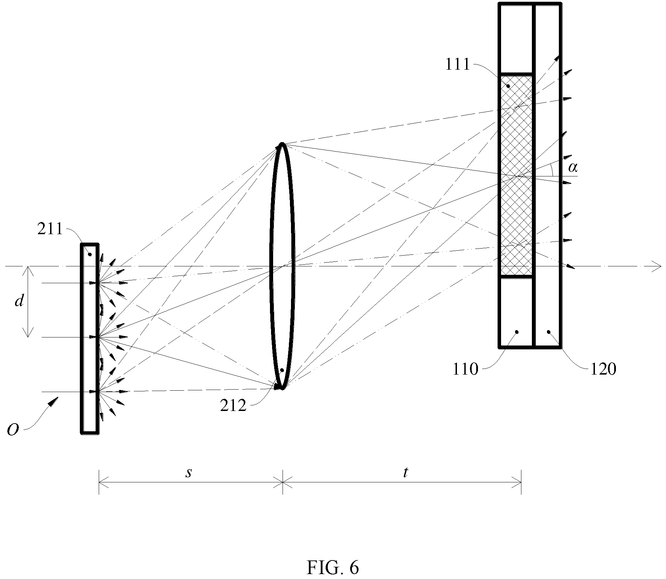

As shown in FIG. 6, taking rays of light at the center of the volume hologram 111 as an example, said rays of light forming a propagation direction angle $\alpha$. According to the imaging rule of the lens 2121, it can be obtained that $\alpha = \arctan\left(\frac{d}{s}\right)$, where $d$ is the deviation distance between the center of a portion of the first diffusion element 211 irradiated by initial signal light and the principal optical axis of the first lens assembly 212, and s is the distance (object distance) between the first diffusion element 211 and the object plane of the first lens assembly 212. Therefore, an exit angle of center rays of light among rays of light emitted from the volume holographic optical diffusion element, i.e., the direction of reproduced signal light, can be regulated by controlling the deviation distance between the center of the portion of the first diffusion element 211 irradiated by initial signal light and the principal optical axis of the first lens assembly 212. The greater the deviation distance d, the greater the direction angle of light beams emitted from the volume holographic optical diffusion element. Further, the direction of reproduced signal light may also be regulated by changing the inclination angle of the first diffusion element 211, as shown in FIG. 7.

The signal light generation system 210 may further include a first beam expander for beam expanding of the signal light O. The first beam expander, the first diffusion element 211, and the first lens assembly 212 are all provided on one side of the holographic photosensitive material layer 110, and are sequentially provided along the direction of the signal light O. The first lens assembly 212 may include one or more lenses 2121. In addition to the lens(es) 2121, the first lens assembly 212 may also include an aperture 2122, as shown in FIG. 8. The first diffusion element 211 may be frosted glass or other elements having a light diffusion property.

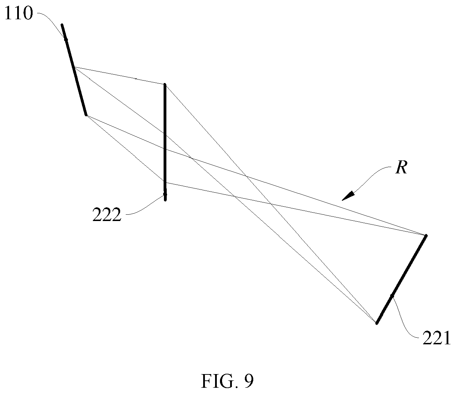

The reference light generation system 220 may include a second beam expander for beam expanding of the reference light *R,* so as to ensure that the area irradiated by the reference light *R* after passing through the system on the plane of the holographic photosensitive material layer 110 covers the area irradiated by the signal light R. Further, the reference light generation system may have an optical system the same as a projection device, but the reference light generation system does not have an image generator. Alternatively, the image generator in the projection device may be replaced with a second diffusion element. As for the latter, as shown in FIG. 9, the reference light generation system 220 includes a second diffusion element 221 and a second lens assembly 222, which are provided on one side of the holographic photosensitive material layer 110. The second diffusion element 221, the second lens assembly 222, and the holographic photosensitive material layer 110 are sequentially provided along the direction of reference light *R.* When the second diffusion element is irradiated with a reference light R emitted by a laser light source, the plane of the real image formed by the reference light *R* passing through the reference light generation system also coincides with the plane of the holographic photosensitive material layer 110, and also coincides with the area irradiated by the signal light *O.* The second diffusion element may be frosted glass or other elements having a light diffusion property, so that the manufactured holographic optical diffusion element requires less assembly accuracy of the projection device, which is conducive to reducing the assembly difficulty.

Signal light *O* is generated by a signal light source, and reference light *R* is generated by a reference light source. The signal light source may be independent of the signal light generation system, or may be integrated into the signal light generation system. In the same way, the reference light source may be independent of the reference light generation system, or may be integrated into the reference light generation system. The signal light source and the reference light source may be laser light sources, respectively, or may be the same laser light source, which is then divided into signal light *O* and reference light *R* by a beam splitter.

The above volume holographic optical diffusion element may be assembled to form a projection display device (projection screen product), in particular a projection head-up display product. For example, FIG. 3 illustrates a possible projection screen product, which includes a projection device and the above volume holographic optical diffusion element. The projection device, similar to a projector, includes an image generator and a third lens assembly 310, provided on one side of the volume holographic optical diffusion element. The image generator, the third lens assembly 310, and the volume holographic optical diffusion element are sequentially provided along a direction of reference light. Rays of light with a virtual image *I* is projected onto the volume holographic optical diffusion element along the direction of the reference light *R* to form the real image *I'* of the virtual image on the volume holographic optical diffusion element. The volume holographic optical diffusion element is irradiated by rays of light from the projection device to generate reproduced signal light *O'.* The reproduced signal light O'enters the human eye *E,* so that the virtual image is seen by the human eye *E.* If the volume holographic optical diffusion element is provided on a windshield or the transparent substrate 120 thereof is a windshield, the projection screen product is actually a projection head-up display product. The virtual image projected by the projection device may be driving information such as speed and navigation information. If the volume holographic optical diffusion element is provided on a display window, or the transparent substrate 120 thereof is a display window, the virtual image projected by the projection device may be introduction information or the like of an article displayed in the display window.

Apparently, the above embodiments of the present invention are merely examples for clearly illustrating the present invention, and are not intended to limit the present invention. For those skilled in the art, other variations or changes in different forms can be made on the basis of the above description. All embodiments need not and cannot be exhaustive herein. Any modifications, equivalents and improvements made within the spirit and principles of the present invention shall be included within the scope of protection of the claims of the present invention.

## Claims

1.  A method for manufacturing a volume holographic optical diffusion element, the method comprising: providing, on a side of a holographic photosensitive material layer (110), a first diffusion element (211) having a light diffusion property; and irradiating signal light (*O*) on the holographic photosensitive material layer (110) after the signal light (*O*) passes through the first diffusion element (211), such that the signal light (*O*) interferes with reference light (R) irradiating the holographic photosensitive material layer (110),
    wherein the method further comprises: providing a first lens assembly (212) between the holographic photosensitive material layer (110) and the first diffusion element (211); and projecting a real image of the first diffusion element (211) onto the holographic photosensitive material layer (110) by the first lens assembly (212).

2.  The method according to claim 1, wherein when the volume holographic optical diffusion element is irradiated by a light beam along a direction of the reference light *(R),* reproduced signal light (*O'*) is generated, wherein a direction of the reproduced signal light (*O'*) is regulated by changing an inclination angle of the first diffusion element (211) and/or a deviation distance of the first diffusion element (211).

**3.** The method according to claim 1 or claim 2, wherein when the volume holographic optical diffusion element is irradiated by a light beam along a direction of the reference light [R], reproduced signal light (*O'*) is generated, and wherein a solid divergence angle (θ) of the reproduced signal light (*O'*) is regulated by changing a distance between the first diffusion element (211) and the first lens assembly (212), an image focal length of the first lens assembly (212) and/or an entrance pupil aperture of the first lens assembly (212).

**4.** The method according to any one of claims 1 to 3, wherein the first lens assembly (212) comprises one, two, or more lenses.

**5.** The method according to any one of claims 1 to 3, wherein the first lens assembly (212) comprises a lens and an aperture.

**6.** The method according to any one of claims 1 to 3, wherein the first diffusion element (211) is a frosted glass.

**7.** An apparatus for manufacturing a volume holographic optical diffusion element, comprising a signal light generation system (210) and a reference light generation system (220), which are provided for interferometrically exposing a holographic photosensitive material layer (110) to manufacture the volume holographic optical diffusion element, wherein the signal light generation system (210) comprises a first diffusion element (211) and a first lens assembly (212), which are provided on a side of the holographic photosensitive material layer (110), wherein the first diffusion element (211), the first lens assembly (212), and the holographic photosensitive material layer (110) are sequentially provided along a direction of the signal light (*O*); the first diffusion element (211) has a light diffusion property; and a real image of the first diffusion element (211) is located on the holographic photosensitive material layer (110).

**8.** The apparatus according to claim 7, wherein the reference light generation system (220) comprises a second diffusion element (221) and a second lens assembly (222), which are provided on the side of the holographic photosensitive material layer (110), wherein the second diffusion element (221), the second lens assembly (222), and the holographic photosensitive material layer (110) are sequentially provided along a direction of the reference light (R); the second diffusion element (221) has a light diffusion property; and a real image of the second diffusion element (221) is located on the holographic photosensitive material layer (110) and coincides with the real image of the first diffusion element (211).

**9.** The apparatus according to claim 7 or claim 8, wherein the first lens assembly (212) comprises one, two, or more lenses; and/or the first lens assembly (212) comprises a lens and an aperture.

**10.** The apparatus according to claim 7 or claim 8, wherein at least one of the first diffusion element (211) and the second diffusion element (221) is a frosted glass.

**11.** A volume holographic optical diffusion element, comprising a holographic photosensitive material layer (110), wherein reproduced signal light (*O'*) is generated only when the holographic photosensitive material layer (110) is irradiated by rays of light in a direction of reference light (R), wherein source points of the reproduced signal light (*O'*) are located on the holographic photosensitive material layer (110), and a solid divergence angle (θ) of the reproduced signal light satisfies $\theta \in (0, 0.5\pi)$.

**12.** The volume holographic optical diffusion element according to claim 11, wherein the solid divergence angle (θ) satisfies $\theta \in [0.001\pi, 0.5\pi]$.

**13.** The volume holographic optical diffusion element according to claim 11 or claim 12, wherein the volume holographic optical diffusion element further comprises a transparent substrate (120) on which the holographic photosensitive material layer (110) is formed.

**14.** The volume holographic optical diffusion element according to any one of claims 11 to 13, wherein the solid divergence angle (θ) satisfies $\theta \in [0.002\pi, 0.3\pi]$.

**15.** The volume holographic optical diffusion element according to claim 13, wherein the transparent substrate (120) is a vehicle window or a display window.

FIG. 1

FIG. 2

FIG. 3

FIG. 4

FIG. 5

FIG. 6

FIG. 7

FIG. 8

FIG. 9

Europäisches
Patentamt

European
Patent Office

Office européen
des brevets

# EUROPEAN SEARCH REPORT

**Application Number**

EP 25 16 0906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 336680 A (MOMOI YOSHIHARU) 25 November 2004 (2004-11-25) | 1-7,9-15 | INV. G03H1/02 |
| Y | * abstract * <br> * figures 5,6 * <br> * paragraph [0017] - paragraph [0036] * | 8 | G02B5/32 <br> G03H1/04 <br><br> ADD. |
| X | JP H02 242218 A (FUJITSU LTD) 26 September 1990 (1990-09-26) | 1-7,9-15 | G02B27/01 |
| Y | * the whole document * | 8 | |
| Y | CN 107 290 808 A (HUAIYIN INST TECHNOLOGY) 24 October 2017 (2017-10-24) | 8 | |
| A | * the whole document * | 1-7,9-15 | |

TECHNICAL FIELDS
SEARCHED     (IPC)

G03H
G02B

The present search report has been drawn up for all claims

| Place of search | Date of completion of the search | Examiner |
|---|---|---|
| Munich | 3 July 2025 | Sittler, Gilles |

EPO FORM 1503 03.82 (P04C01)

## ANNEX TO THE EUROPEAN SEARCH REPORT
## ON EUROPEAN PATENT APPLICATION NO.

EP 25 16 0906

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2025

| Patent document cited in search report | Publication date | Patent family member(s) | Publication date |
|---|---|---|---|
| JP 2004336680 A | 25-11-2004 | JP 4324845 B2<br>JP 2004336680 A | 02-09-2009<br>25-11-2004 |
| JP H02242218 A | 26-09-1990 | JP 2694837 B2<br>JP H02242218 A | 24-12-1997<br>26-09-1990 |
| CN 107290808 A | 24-10-2017 | NONE | |

EPO FORM P0459

For more details about this annex : see Official Journal of the European Patent Office, No. 12/82